# EUROPÄISCHE PATENTSCHRIFT

(11) **EP 3 776 711 B1**
(45) Veröffentlichungstag und Bekanntmachung des Hinweises auf die Patenterteilung: **18.05.2022**
(21) Anmeldenummer: 19734269.4
(22) Anmeldetag: 12.06.2019
(51) Int. Cl.: H01M 10/42, H01G 11/18, H01M 10/48, H02H 7/16, H01G 11/16, H02H 5/04, H02H 5/08

(54) **FREQUENZUMRICHTER, AUFWEISEND EINE SPEICHEREINHEIT FÜR ELEKTRISCHE ENERGIE, VERFAHREN ZUR ÜBERWACHUNG EINES SOLCHEN FREQUENZUMRICHTERS SOWIE FAHRZEUG**
FREQUENCY CONVERTER COMPRISING A STORAGE UNIT FOR ELECTRICAL ENERGY, METHOD FOR MONITORING SUCH A FREQUENCY CONVERTER AND VEHICLE
CONVERTISSEUR DE FRÉQUENCE, COMPRENANT UNE UNITÉ DE STOCKAGE D'ÉNERGIE ÉLECTRIQUE, UN PROCÉDÉ DE SURVEILLANCE D'UN TEL CONVERTISSEUR DE FRÉQUENCE ET UN VÉHICULE

(30) Priorität: 19.06.2018 EP 18178574
(43) Veröffentlichungstag der Anmeldung: 17.02.2021
(73) Patentinhaber: Siemens Aktiengesellschaft, 80333 München (DE)
(72) Erfinder: KLÜBER, Thomas, 91052 Erlangen (DE)
(86) Internationale Anmeldenummer: PCT/EP2019/065276
(87) Internationale Veröffentlichungsnummer: WO 2019/243120

(56) Entgegenhaltungen:
- DE-A1- 3 151 469
- DE-A1-102013 204 529
- US-A- 3 460 019
- US-A1- 2005 191 542

## Beschreibung

Die Erfindung betrifft einen Frequenzumrichter, aufweisend eine Speichereinheit für elektrische Energie und ein Verfahren zur Überwachung eines solchen Frequenzumrichters. Weiter betrifft die Erfindung ein Fahrzeug, insbesondere ein Schienenfahrzeug.

Speichereinheiten für elektrische Energie, wie ein Akku oder ein Kondensator, können bei einem Kurzschluss oder einer sonstigen Fehlfunktion schwere Schäden verursachen. Demnach ist eine Überwachung auf einen Temperaturanstieg in der unmittelbaren Umgebung einer solchen Speichereinheit bereits Stand der Technik.

DE 10 2014 204 965 A1 beschreibt ein Verfahren zur Erkennung von Anomalien in einer Batteriezelle und eine Kurzschluss Sensorik.

US 2013-0122332 A1 offenbart darüber hinaus ein System mit einer integrierten Schaltung, einem Drucksensor und einer Kommunikationsvorrichtung zur Integration in eine Batteriezelle. Weiterer relevanter Stand der Technik ist in der Druckschrift US 2005/191542 A1 offenbart.

Insbesondere für Speichereinheiten zur Speicherung elektrischer Energie ist eine schnelle Reaktion auf eine Fehlfunktion wichtig. Daher ist es Aufgabe der Erfindung, die Erkennung einer Fehlfunktion in einer in einem Frequenzumrichter angeordneten Speichereinheit schnell und sicher zu erkennen.

Die Aufgabe wird durch einen Frequenzumrichter nach Anspruch 1 gelöst. Die Aufgabe wird weiter durch ein Verfahren zur Überwachung eines Frequenzumrichters nach Anspruch 4 gelöst.

Schließlich wird die Aufgabe durch ein Fahrzeug, insbesondere ein Schienenfahrzeug gelöst.

Die in dem Frequenzumrichter angeordnete Speichereinheit für elektrische Energie weist zumindest ein Speicherelement zur Speicherung elektrischer Energie, beispielhaft einen Akku oder einen Kondensator, auf, wobei dem Speicherelement ein Mittel zur Erfassung physikalischer Größen, insbesondere eines Druckes oder einer Temperatur, im unmittelbaren Umfeld zugeordnet ist, wobei das Mittel zur Erfassung der physikalischen Größe zur Erfassung einer zeitlichen Änderung der physikalischen Größe ausgebildet ist, wobei das Mittel zur Erfassung der physikalischen Größe bei Überschreiten einer vorgebbaren zeitlichen Änderung der physikalischen Größe zur Bereitstellung eines Signals ausgebildet ist.

Die Speichereinheit ist als Kondensatoren-Board in dem Frequenzumrichter ausgebildet. Ein Zwischenkreiskondensator ist oft als ein solches Kondensatoren-Board ausgebildet. Die Speicherelemente eignen sich insbesondere zur kurzzeitigen Speicherung von elektrischer Energie.

Die Speichereinheit ist in einem Gehäuse angeordnet.

Das Speicherelement ist als ein elektronisches Bauteil zur zeitweisen Speicherung von elektrischer Energie ausgebildet. Erfindungsgemäß ist ein solches Speicherelement als Kondensator ausgebildet.

Das Mittel zur Erfassung der physikalischen Größe ist als Sensor für die Temperatur und als Sensor für den Druck ausgebildet. Das Mittel zur Erfassung der physikalischen Größe ist vorzugsweise zur Bereitstellung eines Signals ausgebildet. Das Mittel zur Erfassung der physikalischen Größe ist als veränderlicher elektrischer Widerstand ausgebildet. Vorzugsweise nimmt der elektrische Widerstand bei einem starken Anstieg der physikalischen Größe messbar ab. Der Widerstand stellt den Ausgang des Mittels dar.

Unter einer Zuordnung im unmittelbaren Umfeld wird insbesondere verstanden, dass das Mittel zur Erfassung einer physikalischen Größe
- auf einer Oberfläche des Speicherelements positioniert ist,
- zwischen jeweils zwei Speicherelementen positioniert ist,
- in unmittelbarer Näher eines Speicherelements positioniert ist,
- in dem Speicherelement integriert ist oder
- in einem Gehäuse mit dem Speicherelement positioniert ist.

Durch die Position des Mittels zur Erfassung der physikalischen Größe kann beispielhaft ein Anstieg des Drucks, welcher von dem Speicherelement bei einer Fehlfunktion ausgeht, schnell und sicher erfasst werden.

Neben der Erfassung der Änderung der physikalischen Größe kann auch die jeweilige absolute physikalische Größe erfasst werden. Die vorgebbare zeitliche Änderung kann eine Funktion der absoluten Größe sein. Beispielhaft kann ein vorgebbarer zeitlicher Anstieg von der Temperatur oder dem Druck bei einem hohen Umgebungs-Druck oder einer hohen UmgebungsTemperatur höher sein als bei einem Normalzustand (20 Grad Celsius, 1 Atm.).

Bei Bedarf kann dem Mittel zur Erfassung einer physikalischen Größe eine Energieversorgung zugeordnet sein. Vorteilhaft bilden das Mittel und die Energieversorgung eine bauliche Einheit.

Zur Erfassung der physikalischen Größe im unmittelbaren Umfeld des Speicherelements kann das Mittel auf der Oberfläche des Speicherelements oder in unmittelbarer Nähe positioniert sein. Vorzugsweise ist das Mittel zur Erfassung der physikalischen Größe mit einem Befestigungsmittel an dem Speicherelement befestigt.

Das Befestigungsmittel umfasst vorzugsweise eine Klebeverbindung oder eine Klemmverbindung oder ist als solche ausgebildet.

Insbesondere zur Erfassung der zeitlichen Änderung der physikalischen Größe kann dem Mittel zur Erfassung ein flüchtiger oder nichtflüchtiger Datenspeicher zugeordnet sein.

Vorzugsweise ist der elektrische Widerstand des Mittels zur Erfassung der physikalischen Größe bei Überschreiten der vorgebbaren zeitlichen Änderung näherungsweise Null. Das Mittel zur Erfassung der physikalischen Größe ist demnach als veränderbarer Widerstand ausgebildet. Vorteilhaft fließt ein Strom ungehindert durch das Mittel zur Erfassung der physikalischen Größe insofern ein zeitlicher Anstieg der physikalischen Größe erfasst ist.

Unter einer vorgebbaren zeitlichen Änderung der physikalischen Größe wird insbesondere ein Wert für die zeitliche Änderung verstanden, der lediglich bei einer Fehlfunktion des Speicherelementes bzw. der Speichereinheit auftritt.

Beispielhaft ist bei einem Kurzschluss in einem Kondensator ein kurzzeitiger Druckanstieg im Gehäuse des Kondensators feststellbar. Dieser Druckanstieg ist größer als ein Druckanstieg, der beispielhaft durch natürlichen Druckanstieg (durch veränderliche Witterungsbedingungen) erfolgt.

Ebenso kann bei einer Fehlfunktion einer Speichereinheit ein Temperaturanstieg erfolgen, der über einen von außen induzierten Temperaturanstieg hinausgeht. Durch die Erfassung eines solchen Temperaturanstieges durch das Mittel zur Erfassung der physikalischen Größe (Temperatur) kann eine Fehlfunktion eines Speicherelements oder der Speichereinheit sicher und schnell festgestellt werden.

Die vorgebbare zeitliche Änderung der physikalischen Größe ist vorzugsweise ein Wert, welcher betragsmäßig größer ist als ein Wert der natürlichen zeitlichen Änderung der physikalischen Größe.

Das Signal kann ein TTL-Signal (Transistor-Transistor-Logik-Signal) sein, wobei das Signal einem übergeordneten Sicherheitssystem bereitgestellt wird.

Durch eine solche Speichereinheit, die mit einem solchen Mittel zur Erfassung der physikalischen Größe ausgestattet ist, kann eine Fehlfunktion schnell und vor allem sicher ermittelt werden. Die Erfindung trägt demnach zum sicheren Betrieb der Speichereinheit bei.

Bei dem Verfahren zur Überwachung einer Speichereinheit für elektrische Energie auf eine Fehlfunktion, insbesondere einem Kurzschluss, umfasst der Energiespeicher einen oder mehrere Speicherelemente, wobei dem jeweiligen Speicherelement ein Mittel zur Erfassung einer physikalischen Größe zugeordnet ist, wobei das Mittel zur Erfassung der physikalischen Größe eine zeitliche Änderung der physikalischen Größe detektiert, wobei das Mittel zur Erfassung der physikalischen Größe bei Überschreiten einer vorgebbaren zeitlichen Änderung der physikalischen Größe ein Signal bereitstellt oder einen elektrischen Widerstand aufweist.

Unter einer Fehlfunktion wird insbesondere ein Kurzschluss, eine Überhitzung eines Speicherelements verstanden. Darüber hinaus kann eine Verpuffung in einem Speicherelement eine Folge einer Fehlfunktion, beispielsweise ein Kurzschluss, sein.

Bei einem Kurzschluss in einem Kondensator oder einer Batterie wird in der Regel innerhalb kurzer Zeit ein Reaktionsgas freigesetzt oder es erfolgt ein rascher Temperaturanstieg.

Beide Phänomene führen zu einem raschen zeitlichen Anstieg des Druckes im unmittelbaren Umfeld des jeweiligen Speicherelements. Dieser zeitliche Anstieg des Druckes kann mit dem Mittel zur Erfassung der physikalischen Größe erfasst werden. Bei Überschreiten der zeitlichen Änderung der physikalischen Größe, insbesondere des Drucks, kann auf eine Fehlfunktion geschlossen werden.

Durch das Verfahren kann eine rasche und sichere Feststellung einer Fehlfunktion erfolgen.

Das Mittel zur Erfassung der physikalischen Größe bzw. das weitere Mittel zur Erfassung einer weiteren physikalischen Größe ist als Druck- bzw. als Temperatursensor ausgebildet.

Vorzugsweise umfasst das Mittel zur Erfassung der physikalischen Größe einen Temperatursensor und einen Drucksensor.

Das Mittel zur Erfassung der physikalischen Größe dient unmittelbar zur Erfassung der zeitlichen Änderung der Temperatur und zur unmittelbaren Erfassung der zeitlichen Änderung des Druckes.

Durch die Bestimmung des Druckes und der Temperatur kann besonders einfach und sicher auf eine Fehlfunktion der Speichereinheit geschlossen werden.

Erfindungsgemäß ist das Signal entsprechend einem elektrischen Widerstand des Mittels zur Erfassung der physikalischen Größe ausgebildet.

In der erfindungsgemäßen Ausgestaltung des Mittels zur Erfassung der physikalischen Größe ist gemäß der physikalischen Größe und/oder gemäß der zeitlichen Änderung der physikalischen Größe der elektrische Widerstand des Mittels festgelegt.

So kann der elektrische Widerstand des Mittels zur Erfassung der physikalischen Größe proportional zum Druck oder zur Temperatur sein.

Weiter kann der elektrische Widerstand des Mittels zur Erfassung der physikalischen Größe oder der optional zugeordneten Auswerteeinheit proportional zur zeitlichen Veränderung des Druckes oder der Temperatur sein.

Durch die Ausgestaltung des Mittels zur Erfassung der physikalischen Größe und/oder der Auswerteeinrichtung als veränderlichen elektrischen Widerstand kann die Feststellung einer Fehlfunktion auch ohne eine Energiequelle oder beim Ausfall der Energiequelle für das Mittel oder für die Auswerteeinrichtung erfolgen.

Durch diese Ausführung wird die Sicherheit durch die Überwachung der Speichereinheit erhöht werden.

Des Weiteren sind die Auswerteeinrichtung und/oder das Mittel zur Erfassung einer physikalischen Größe mit einem übergeordneten Sicherheitssystem verbunden.

Erfindungsgemäß sind das Mittel zur Erfassung der physikalischen Größe und das Speicherelement in einem geschlossenen oder im Wesentlichen geschlossenen Gehäuse angeordnet.

Durch die Anordnung der jeweiligen Speicherelemente in einem Gehäuse kann eine räumliche Trennung der Speicherelemente von weiteren elektronischen Baugruppen zum Schutz der Baugruppen erfolgen. Durch die Positionierung des Mittels zur Erfassung der physikalischen Größe kann eine Bestimmung der Temperatur oder des Druckes mit einer erhöhten Genauigkeit erfolgen, da das Gehäuse das jeweilige Speicherelement sowie das Mittel zur Erfassung der physikalischen Größe von der Umgebung abschirmt.

Bei einer weiteren vorteilhaften Ausgestaltung der Erfindung ist dem Mittel zur Erfassung der physikalischen Größe eine Auswerteeinrichtung zugeordnet, wobei der Auswerteeinrichtung und/oder dem Mittel zur Erfassung der physikalischen Größe eine Energiequelle zugeordnet ist und die Energiequelle zur Versorgung des Mittels zur Erfassung der physikalischen Größe und/oder der Auswerteeinrichtung mit elektrischer Energie vorgesehen ist.

Die Auswerteeinrichtung liegt vorzugsweise mit dem Mittel zur Erfassung der physikalischen Größe als gekapselte Einheit vor. Vorzugsweise kann die Energiequelle ebenfalls in der gekapselten Einheit integriert sein. Eine solche gekapselte Einheit kann vereinfacht in einer bestehenden Speichereinheit integriert werden. Eine solche gekapselte Einheit kann in ein Speicherelement selbst integriert sein.

Durch diese Einheit sind das Mittel zur Erfassung der physikalischen Größe und die Auswerteeinheit in eine bestehende Speichereinheit und/oder ein bereits bestehendes Speicherelement nachrüstbar.

Die Auswerteeinheit ermittelt vorzugsweise die physikalische Größe und/oder erfasst die zeitliche Änderung der von dem Mittel erfassten physikalischen Größe. Die zeitliche Änderung kann als Signal einem übergeordneten Sicherheitssystem bereitgestellt werden. Vorzugsweise ist die Auswerteeinrichtung derart eingerichtet, dass nur bei Überschreiten der vorgebbaren zeitlichen Änderung der physikalischen Größe ein Signal bereitgestellt wird. Anstelle eines Signals kann die Auswerteeinrichtung oder das Mittel zur Erfassung der physikalischen Größe auch als veränderbarer elektrischer Widerstand ausgebildet sein, wobei der elektrische Widerstand der Auswerteeinrichtung oder das Mittel zur Erfassung der elektrischen Größe einen vorgebbaren elektrischen Widerstand aufweist, insofern die zeitliche Änderung der physikalischen Größe die vorgebbare zeitliche Änderung betragsmäßig übersteigt.

Die Energiequelle dient zur Versorgung der Auswerteeinrichtung und/oder des Mittels zur Erfassung der physikalischen Größe mit elektrischer Energie.

Durch die vorgeschlagene gekapselte Einheit ist eine bereits bestehende Speichereinheit auf besonders einfache Art und Weise nachrüstbar.

Bei einer weiteren vorteilhaften Ausgestaltung der Erfindung ist das Mittel zur Erfassung einer physikalischen Größe in dem Speicherelement integriert.

Vorteilhaft ist das Mittel zur Erfassung der physikalischen Größe als Folien-artige oder als flache und biegsame Struktur ausgebildet.

Durch die flache und biegsame Ausprägung des Mittels zur Erfassung der physikalischen Größe kann eine Integration in ein Speicherelement leicht erfolgen.

Alternativ kann das Mittel zur Erfassung gekapselt ausgebildet sein. Vorteilhaft erfolgt die Kapselung derart, dass das Mittel zur Feststellung der physikalischen Größe leicht auf die Oberfläche oder im Inneren des Speicherelements befestigbar ist.

Die Kapselung des Mittels zur Erfassung der physikalischen Größe kann zusammen mit der Auswerteeinrichtung und der Energiequelle erfolgen. Vorteilhaft kann die Kapselung derart erfolgen, dass eine hohe Brandschutzklasse für die gekapselte Einheit erhaltbar ist.

Das übergeordnete Sicherheitssystem ist als Brandschutzsicherung ausgebildet. Das übergeordnete Sicherheitssystem erfasst den elektrischen Widerstand des Mittels zur Erfassung der physikalischen Größe und/oder des elektrischen Widerstandes der Auswerteeinrichtung. Alternativ oder zusätzlich weist das übergeordnete Sicherheitssystem einen Eingang für das Signal auf, welches die Auswerteeinrichtung und/oder das Mittel zur Erfassung der physikalischen Größe bereitstellt.

Bei einer Fehlfunktion, d.h. einer zeitlichen Änderung der physikalischen Größe über betragsmäßig über die vorgebbare zeitliche Änderung der physikalischen Größe hinaus, dient die übergeordnete Sicherheitssteuerung vorzugsweise zur Unterbrechung der Energiezufuhr des Speicherelements. Vorteilhaft dient das übergeordnete Sicherheitssystem zur kontrollierten Abführung der gespeicherten elektrischen Energie aus der Speichereinheit oder aus dem jeweiligen Speicherelement.

Durch die Integration des Mittels zur Erfassung der physikalischen Größe kann ein übergeordnetes Sicherheitssystem in seiner Funktion erweitert werden. So kann die hier beschriebene Speichereinheit mit einer verbesserten Sicherheit betrieben werden.

Bei einer weiteren vorteilhaften Ausgestaltung der Erfindung ist der Speichereinheit neben dem Mittel zur Erfassung einer physikalischen Größe und ein weiteres Mittel zur Erfassung einer weiteren physikalischen Größe zugeordnet, wobei das Mittel und das weitere Mittel zur Erfassung der physikalischen Größe bzw. der weiteren physikalischen Größe mit dem übergeordneten Sicherheitssystem verbunden sind, wobei das Mittel und das weitere Mittel zur Erfassung der physikalischen Mittel jeweils bei Überschreiten der vorgebbaren zeitlichen Änderung der physikalischen Größe oder einer festgelegten physikalischen Größe einen festgelegten elektrischen Widerstand aufweisen, wobei der elektrische Widerstand von dem übergeordneten Sicherheitssystem erfasst wird, wobei das Mittel zur Erfassung der physikalischen Größe und das weitere Mittel zur Erfassung der weiteren physikalischen Größe elektrisch parallel geschaltet sind. Mit anderen Worten ist der Speichereinheit ein weiteres Mittel zur Erfassung einer weiteren physikalischen Größe, insbesondere einer Temperatur, zugeordnet, wobei das Mittel und das weitere Mittel zur Erfassung der weiteren physikalischen Größe mit dem übergeordneten Sicherheitssystem verbunden sind, wobei das Mittel zur Erfassung der physikalischen Größe bei Überschreiten der vorgebbaren zeitlichen Änderung und das weitere Mittel zur Erfassung der weiteren physikalischen Größe bei Überschreiten eines vorgebbaren Wertes oder bei Überschreiten einer weiteren vorgebbaren zeitlichen Änderung jeweils einen festgelegten elektrischen Widerstand aufweisen, wobei der elektrische Widerstand von dem übergeordneten Sicherheitssystem erfasst wird, wobei das Mittel zur Erfassung der physikalischen Größe und das weitere Mittel zur Erfassung der weiteren physikalischen Größe elektrisch parallel geschaltet sind.

Erfindungsgemäß ist das weitere Mittel zur Erfassung einer physikalischen Größe als Temperatursensor, insbesondere als Brandschutzkabel, ausgebildet.

Erfindungsgemäß ist das Mittel zur Erfassung einer physikalischen Größe als Drucksensor ausgebildet.

Der Drucksensor dient zur Erfassung eines rasch ansteigenden Druckes durch eine Fehlfunktion in einem Speicherelement.

Vorzugsweise sind das Mittel und das weitere Mittel zur Erfassung der physikalischen Größe jeweils elektrisch parallel geschaltet. Somit ändert sich der Gesamtwiderstand aus der Reihenschaltung abhängig von den Messwerten des Mittels und des weiteren Mittels. Durch die Parallelschaltung können kritische Fehlerhafte Zustände sicher und zuverlässig erkannt werden. Dies ist gerade für ein elektrische betriebenes Schienenfahrzeug von besonderer Bedeutung.

Im Falle eines Brandschutzkabels in Kombination mit einem Druckmesser sind vorzugsweise beide Mittel zur Erfassung der physikalischen Größe als veränderliche Widerstände ausgebildet. Im Falle einer Fehlfunktion ändert sich zumindest einer der elektrischen Widerstände. Diese Änderung des elektrischen Widerstandes kann durch das übergeordnete Sicherheitssystem überwacht werden. Bei einer Änderung des elektrischen Widerstandes kann auf eine Fehlfunktion geschlossen werden und das übergeordnete Sicherheitssystem stellt ein Warnsignal bereit und/oder leitet die oben genannten Schritte ein.

Bei einer weiteren vorteilhaften Ausgestaltung der Erfindung ist das übergeordnete Sicherheitssystem bei Überschreiten der vorgebbaren zeitlichen Änderung der physikalischen Größe zur Entkoppelung und/oder zur Ableitung der elektrischen Energie aus dem jeweiligen Speicherelement ausgebildet.

Eine Entkopplung des jeweiligen Speicherelements oder die Entkopplung der Speichereinheit von der Energieversorgung erfolgt vorzugsweise durch Auftrennen der Energiezuführung. Das Auftrennen erfolgt in besonders einfacher Art und Weise durch einen Schalter.

Vorzugsweise erfolgt im Falle einer Fehlfunktion die Übertragung der in dem jeweiligen Speicherelement gespeicherten Energie in einen Lastwiderstand. So kann die Brandgefahr weiter reduziert werden.

Bei einer weiteren vorteilhaften Ausgestaltung der Erfindung wird das Signal einem übergeordneten Sicherheitssystem bereitgestellt, wobei das übergeordnete Sicherheitssystem bei Erhalt des Signals die Zufuhr von elektrischer Energie in das jeweilige Speicherelement unterbindet und/oder die elektrische Energie aus dem jeweiligen Speicherelement entfernt.

Das Signal kann hierbei, wie vorstehend ausgeführt, auch als elektrischer Widerstand des jeweiligen Mittels zur Erfassung der physikalischen Größe ausgebildet sein.

Durch die Ausführung kann eine besonders schnell reagierende Erfassung der Fehlfunktion der Speichereinheit registriert werden.

Bei einer weiteren vorteilhaften Ausgestaltung der Erfindung wird mit Hilfe des Mittels zur Erfassung der physikalischen Größe ein Druck- und/oder Temperaturanstieg im unmittelbaren Umfeld des jeweiligen Speicherelements erfasst.

Vorzugsweise erfasst das Mittel zur Erfassung der physikalischen Größe die zeitliche Änderung der Temperatur und/oder des Druckes direkt.

Unter einer direkten Erfassung einer zeitlichen Änderung wird die Erfassung der Änderung der physikalischen Größe ohne den Einsatz einer Recheneinheit, welche eine zeitliche Differentiation der physikalischen Größe nach der Zeit durchführt.

Vorzugsweise ist dem jeweiligen Speicherelement ein eigenes Mittel zur Erfassung der physikalischen Größe zugeordnet.

Alternativ oder zusätzlich ist dem jeweiligen Mittel zur Erfassung der physikalischen Größe zumindest ein Speicherelement zugeordnet.

Durch die Ermittlung der zeitlichen Änderung, insbesondere des Anstieges des Druckes und/oder der Temperatur, kann eine besonders sichere Überwachung einer Speichereinheit erfolgen. Explosionen oder eine starke Wärmeentwicklung können so leicht und sicher registriert werden.

Bei einer weiteren vorteilhaften Ausgestaltung der Erfindung weist das Mittel zur Erfassung der physikalischen Größe, je nach Änderung der physikalischen Größe, einen bekannten elektrischen Widerstand auf, wobei der Widerstand von dem übergeordneten Sicherheitssystem erfasst wird.

Der bekannte Widerstand ist vorzugsweise nahe Null oder Unendlich, so dass im Falle einer Fehlfunktion der Speichereinheit ein Strom entweder weitgehend ungehindert oder nicht fließt. Dies ist vorteilhaft einfach nachzuweisen.

Einen Widerstand auf einen bestimmten endlichen positiven Wert ungleich Null, beispielshaft ca. 100 Ohm, festzulegen kann auf der anderen Seite eine besonders sichere Überwachung der Speichereinheit gewährleisten. Ein "falscher Alarm" ist hierdurch weitgehend ausgeschlossen.

Durch den Widerstand ist es auch möglich, die Ausgänge zweier Mittel, das heißt des Mittels und des weiteren Mittels auf einfache Weise miteinander zu koppeln. Dies kann beispielsweise durch eine Parallelschaltung oder eine Reihenschaltung geschehen. Dabei ändert sich der Gesamtwiderstand in Abhängigkeit von den Messwerten der beiden Mitteln, und damit von dem jeweiligen Widerstand des entsprechenden Mittels bzw. weiteren Mittels.

Eine vorteilhafte Anwendung der hier beschriebenen Erfindung ist ein Fahrzeug, insbesondere Schienenfahrzeug, mit einer oben beschriebenen Speichereinheit.

Das Fahrzeug weist vorteilhaft einen Energiespeicher für elektrische Energie, wie eine Batterie, auf. Weiter vorteilhaft kann die Erfindung zur Überwachung eines Zwischenkreiskondensators, insbesondere einer Einheit mit einer Mehrzahl von Kondensatoren, dienen.

Besonders vorteilhaft erfolgt der Einsatz der Erfindung in einem Schienenfahrzeug wie einer Lokomotive. Bevorzugt dient die Erfindung zur Überwachung eines Zwischenkreisspeichers bei einem Frequenzumrichter des Schienenfahrzeugs.

Erfindungsgemäß wird ein Frequenzumrichter, aufweisend eine hier beschriebene Speichereinheit bereitgestellt.

Ein Zwischenkreiskondensator des Frequenzumrichters ist erfindungsgemäß eine solche Speichereinheit.

Im Folgenden wird die Erfindung anhand von Figuren näher beschrieben und erläutert. Die in den Figuren gezeigten Merkmale können im Rahmen der Erfindung zu neuen Ausgestaltungen der Erfindung kombiniert werden.

Es zeigen:
- FIG 1: eine beispielhafte Speichereinheit,
- FIG 2: eine beispielhafte Speichereinheit mit einem integrierten Mittel zur Erfassung einer physikalischen Größe,
- FIG 3: eine beispielhafte Speichereinheit,
- FIG 4: eine beispielhafte Speichereinheit sowie
- FIG 5: eine mögliche Schaltanordnung.

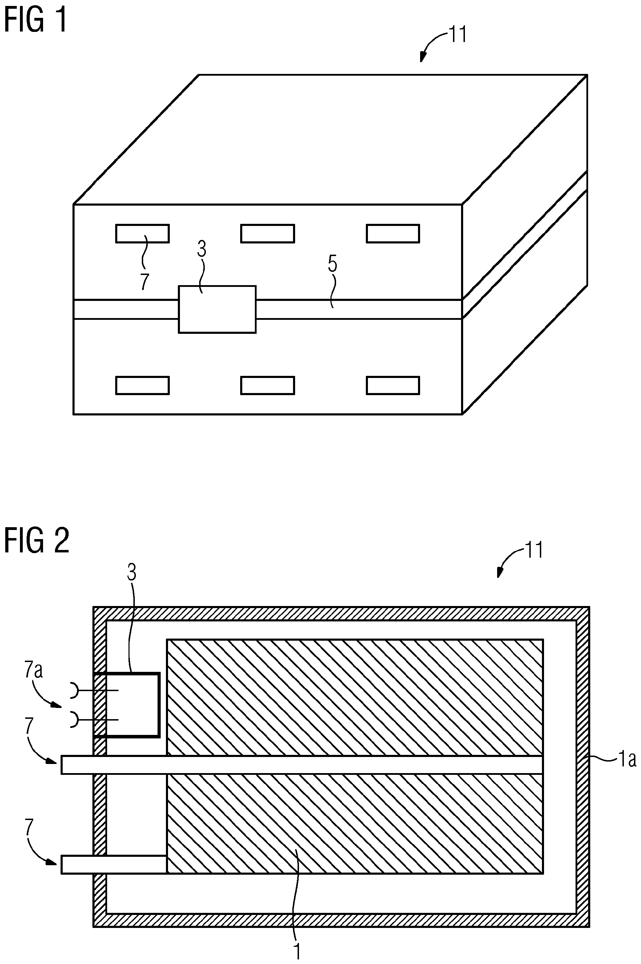

FIG 1 zeigt eine beispielhafte Speichereinheit 11, das als Kondensator ausgebildet ist.

Die Speichereinheit 11 umfasst vorzugsweise zumindest ein Speicherelement 1 (nicht gezeigt). Das Speicherelement 1 umfasst eine Mehrzahl von Anschlusselementen 7. Die Anschlusselemente 7 dienen zur Zuführung und zum Abführen elektrischer Energie. Dem Speicherelement 1 ist weiter ein Mittel zur Erfassung einer physikalischen Größe 3 zugeordnet.

Das Mittel 3 zur Erfassung der physikalischen Größe ist als Drucksensor und als Temperatursensor ausgebildet.

Zur Befestigung des Mittels 3 zur Erfassung der physikalischen Größe dient ein Befestigungsmittel 5. Das Mittel 3 zur Erfassung der physikalischen Größe kann auch in dem Speicherelement 1 integriert sein, wie nachfolgend gezeigt.

FIG 2 zeigt eine beispielhafte Speichereinheit 11 mit einem integrierten Mittel 3 zur Erfassung einer physikalischen Größe 1. Das hier gezeigte Speichereinheit 11 ist weist einen Kondensator als Speicherelement auf. Die Speichereinheit 11 umfasst Anschlusselemente 7 sowie ein Mittel 3 zur Erfassung einer physikalischen Größe. Das Mittel 3 zur Erfassung der physikalischen Größe ist mit der Speicherelement 1 gemeinsam in einem Gehäuse 1a oder der Hülle der Speichereinheit 11 integriert. Das Mittel zur Erfassung der physikalischen Größe 3 weist überdies eigene Anschlusselemente 7a auf, wobei die Anschlusselemente 7a zur Erfassung der physikalischen Größe sowie zur Stromversorgung des Mittels zur Erfassung der physikalischen Größe dienen können.

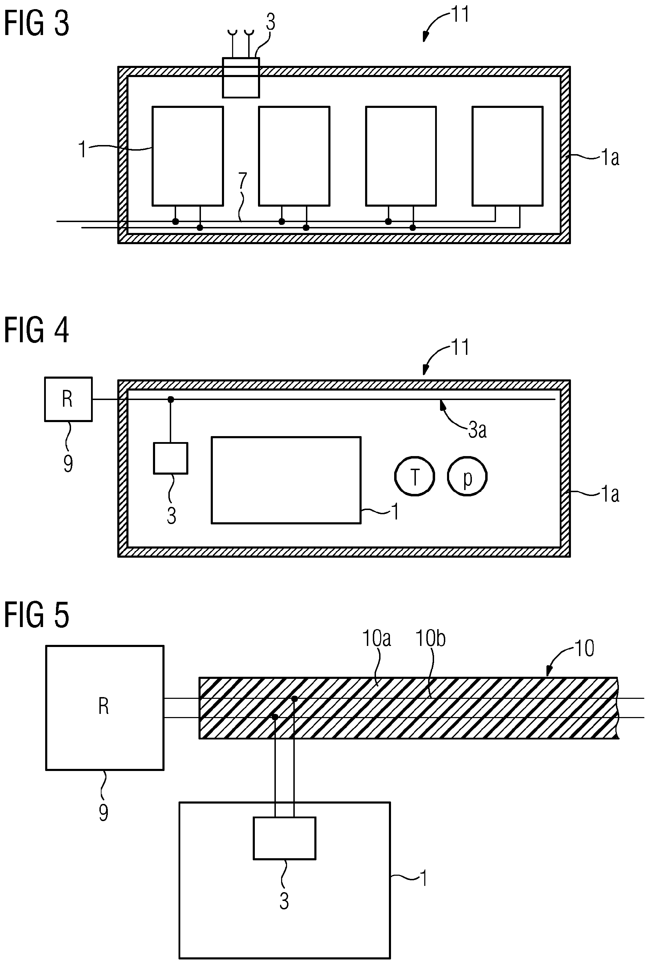

FIG 3 zeigt eine Speichereinheit 11. Die Speichereinheit 11 umfasst vier Speicherelemente 1, die gemeinsam in einem Gehäuse 1a der Speichereinheit 11 integriert sind. Dem Gehäuse 1a ist weiter das Mittel 3 zur Erfassung der physikalischen Größe zugeordnet. Das Mittel 3 zur Erfassung der physikalischen Größe ist hier lediglich im selben Gehäuse 1a wie die Speicherelemente 1 untergebracht. Demnach ist das Mittel 3 zur Erfassung der physikalischen Größe als Druckmess- oder als Drucksensor ausgebildet. Bei einer Fehlfunktion eines der Speichereinheiten 1 steigt der Druck p innerhalb des Gehäuses 1a an. Dieser zeitliche Anstieg des Drucks p wird mit Hilfe des Mittels 3 zur Erfassung der physikalischen Größe registriert.

FIG 4 zeigt eine beispielhafte Speichereinheit 11. Die Speichereinheit 11 umfasst ein Gehäuse 1a und einen Temperatursensor 3a in Form eines Kabels. Weiter umfasst die gezeigte Speichereinheit 11 ein Mittel zur Erfassung der physikalischen Größe 3. Zur Ermittlung der Temperatur T und des Drucks p dient ein übergeordnetes Sicherheitssystem 9. Das übergeordnete Sicherheitssystem 9 erfasst den elektrischen Widerstand R des Temperatursensors und des Drucksensors.

Bei einer Fehlfunktion des Speicherelements 1, beispielhaft einem Kurzschluss in dem Speicherelement 1, erfolgt ein sprunghafter Anstieg des Druckes p in dem Gehäuse 1a. Der Anstieg des Drucks p wird durch das Mittel 3 zur Erfassung der physikalischen Größe registriert. Das Mittel 3 stellt vorzugsweise in einem solchen Fall ein Signal zu dem übergeordneten Sicherheitssystem 9 bereit. Im Falle einer starken Erwärmung des Speicherelements 11 aufgrund der Fehlfunktion wird die Wärmeentwicklung mit Hilfe des Temperatursensors 3a registriert. Das übergeordnete Sicherheitssystem 9 registriert den Anstieg der Temperatur T und trennt beispielhaft das Speicherelement von der Stromzufuhr. Das übergeordnete Sicherheitssystem stellt gegebenenfalls ein Warnsignal bereit.

FIG 5 zeigt eine mögliche Schaltanordnung. Die Schaltungsanordnung kann einer hier beschriebenen Speichereinheit 11 zugeordnet sein. Gezeigt ist das übergeordnete Sicherheitssystem 9, welches zur Erfassung des elektrischen Widerstandes R eines Brandschutzkabels 10 dient. Das Brandschutzkabel 10 umfasst eine Polymerschicht 10a sowie zwei Leiter 10b des Brandschutzkabels. Das Brandschutzkabel 10 dient als Temperatursensor 3a. Bei einem Temperaturanstieg über eine festgelegte Temperatur schmilzt die Polymerschicht 10a des Brandschutzkabels und die Leiter 10b des Brandschutzkabels können einander berühren. Durch die Berührung der beiden Leiter 10b des Brandschutzkabels 10 sinkt der Widerstand R, welcher mit Hilfe des übergeordneten Sicherheitssystems 9 erfasst wird. Der jeweilige Leiter 10b des Brandschutzkabels 10 ist überdies mit dem Mittel zur Erfassung der physikalischen Größe 3 parallel geschaltet. Das Mittel 3 zur Erfassung der physikalischen Größe ist hier als Drucksensor 3a ausgebildet. Das Mittel 3 zur Erfassung der physikalischen Größe ist hierbei einem Speicherelement 1 zugeordnet. Bei Auftreten einer Fehlfunktion des Speicherelements 1 ändert sich der Druck p und die Temperatur T, in dem Speicherelement sowie in der unmittelbaren Umgebung des Speicherelements 1. Eine Änderung der Temperatur T wird durch das Brandschutzkabel 10 registriert. Eine Änderung des Drucks p wird durch das Mittel 3 zur Erfassung der physikalischen

Größe registriert. Bei einer Fehlfunktion ändert sich demnach der Widerstand R des Brandschutzkabels oder des Mittels 3 zur Erfassung der physikalischen Größe. Die übergeordnete Steuereinrichtung 9 erfasst die Änderung des elektrischen Widerstandes R und ist in der Lage, ein Signal bereitzustellen.

Bei einer Fehlfunktion des Speicherelements 1 wird vorteilhaft die Stromversorgung des Speicherelements unterbrochen.

Die gezeigte Ausführung ist in einem geschlossenen Gehäuse 11 oder einem wesentlichen geschlossenen Gehäuse 11 angeordnet.

Zusammenfassend betrifft die Erfindung einen Frequenzumrichter, aufweisend eine Speichereinheit 11 für elektrische Energie sowie ein Verfahren zur Überwachung eines solchen Frequenzumrichters. Die Speichereinheit 11 weist zumindest einen Kondensator auf. Dem Speicherelement 1 ist ein Mittel 3 zur Erfassung physikalischer Größen, nämlich eines Druckes p und einer Temperatur T, im unmittelbaren Umfeld des Speicherelements 1 zugeordnet, wobei das Mittel 3 zur Erfassung der physikalischen Größe zur Erfassung einer zeitlichen Änderung der physikalischen Größe ausgebildet ist, wobei das Mittel 3 zur Erfassung der physikalischen Größe bei Überschreiten einer vorgebbaren zeitlichen Änderung der physikalischen Größe zur Bereitstellung eines Signals ausgebildet ist. Ein vorteilhafter Einsatz der Erfindung erfolgt in einem Zwischenkreiskondensator bei einem Schienenfahrzeug.

## Patentansprüche

1. Frequenzumrichter, aufweisend eine Speichereinheit (11) für elektrische Energie, aufweisend zumindest ein Speicherelement (1) zur Speicherung elektrischer Energie, wobei die Speichereinheit (11) als Zwischenkreiskondensator ausgebildet ist, wobei dem Speicherelement (1) ein Mittel (3) zur Erfassung von physikalischen Größen im unmittelbaren Umfeld des Speicherelements (1) zugeordnet ist, wobei das Mittel (3) zur Erfassung der physikalischen Größe einen Drucksensor und einen Temperatursensor (3a) umfasst, wobei das Mittel (3) zur Erfassung der physikalischen Größe zur Erfassung einer zeitlichen Änderung der physikalischen Größe ausgebildet ist, wobei das Mittel (3) zur Erfassung der physikalischen Größe bei Überschreiten einer vorgebbaren zeitlichen Änderung der physikalischen Größe zur Bereitstellung eines Signals ausgebildet ist, wobei das Mittel (3) zur Erfassung der physikalischen Größe und das Speicherelement in einem geschlossenen oder im Wesentlichen geschlossenen Gehäuse (1a) angeordnet sind, wobei das Signal entsprechend einem elektrischen Widerstand (R) des Mittels (3) zur Erfassung der physikalischen Größe ausgebildet ist, wobei der Widerstand den Ausgang des Mittels (3) zur Erfassung der physikalischen Größe darstellt, wobei die Auswerteeinrichtung und/oder das Mittel (3) zur Erfassung einer physikalischen Größe mit einem übergeordneten Sicherheitssystem (9) verbunden sind, wobei das übergeordnete Sicherheitssystem als Brandschutzsicherung ausgebildet ist, wobei das übergeordnete Sicherheitssystem (9) bei Überschreiten der vorgebbaren zeitlichen Änderung der physikalischen Größe zur Entkoppelung und/oder zur Ableitung der elektrischen Energie aus dem jeweiligen Speicherelement (1) ausgebildet ist.

2. Frequenzumrichter nach Anspruch 1, wobei das Mittel (3) zur Erfassung einer physikalischen Größe in dem Speicherelement (1) integriert ist.

3. Frequenzumrichter nach einem der vorangehenden Ansprüche, wobei der Speichereinheit (11) ein weiteres Mittel zur Erfassung einer weiteren physikalischen Größe, insbesondere einer Temperatur, zugeordnet ist, wobei das Mittel (3) und das weitere Mittel zur Erfassung der weiteren physikalischen Größe mit dem übergeordneten Sicherheitssystem (9) verbunden sind, wobei das (3) Mittel zur Erfassung der physikalischen Größe bei Überschreiten der vorgebbaren zeitlichen Änderung und das weitere Mittel zur Erfassung der weiteren physikalischen Größe bei Überschreiten eines vorgebbaren Wertes oder bei Überschreiten einer weiteren vorgebbaren zeitlichen Änderung jeweils einen festgelegten elektrischen Widerstand (R) aufweisen, wobei der elektrische Widerstand (R) von dem übergeordneten Sicherheitssystem (9) erfasst wird, wobei das Mittel zur Erfassung der physikalischen Größe und das weitere Mittel zur Erfassung der weiteren physikalischen Größe elektrisch parallel geschaltet sind.

4. Verfahren zur Überwachung eines Frequenzumrichters nach einem der Ansprüche 1 bis 3, auf eine Fehlfunktion, insbesondere einen Kurzschluss, wobei die Speichereinheit (11) ein oder mehrere Speicherelemente (1) umfasst, wobei das Mittel (3) zur Erfassung der physikalischen Größe eine zeitliche Änderung der physikalischen Größe oder die physikalische Größe detektiert, wobei das Mittel (3) zur Erfassung der physikalischen Größe bei Überschreiten einer vorgebbaren zeitlichen Änderung der physikalischen Größe ein Signal bereitstellt und einen elektrischen Widerstand (R) aufweist, wobei das Mittel (3) zur Erfassung der physikalischen Größe je nach Änderung der physikalischen Größe einen bekannten elektrischen Widerstand (R) aufweist und der Widerstand (R) von dem übergeordneten Sicherheitssystem (9) erfasst wird und das übergeordnete Sicherheitssystem (9) bei Erhalt des Signals die Energiezufuhr des Speicherelements (11) unterbricht und die gespeicherte Energie aus dem Speicherelement (1) kontrolliert abführt.

5. Verfahren nach Anspruch 4, wobei mit Hilfe des Mittels (3) zur Erfassung der physikalischen Größe ein Druck- und/oder Temperaturanstieg im unmittelbaren Umfeld des jeweiligen Speicherelements (1) erfasst wird.

6. Fahrzeug, insbesondere Schienenfahrzeug, aufweisend eine Frequenzumrichter nach einem der Ansprüche 1 bis 3.

## Claims

1. Frequency converter, having a storage unit (11) for electrical energy, having at least one storage element (1) for storing electrical energy, wherein the storage unit (11) is designed as an intermediate circuit capacitor, wherein a means (3) for detecting physical variables in the immediate vicinity of the storage element (1) is assigned to the storage element (1), wherein the means (3) for detecting the physical variable comprises a pressure sensor and a temperature sensor (3a), wherein the means (3) is designed to detect the physical variable for detecting a change over time of the physical variable, wherein the means (3) for detecting the physical variable is designed to provide a signal when a predefinable change over time of the physical variable is exceeded, wherein the means (3) for detecting the physical variable and the storage element are arranged in an enclosed or essentially enclosed housing (1a), wherein the signal is designed in accordance with an electrical resistance (R) of the means (3) for detecting the physical variable, wherein the resistance represents the output of the means (3) for detecting the physical variable, wherein the evaluation facility and/or the means (3) for detecting a physical variable are connected to a higher-level security system (9), wherein the higher-level security system is designed as a fire protection system, wherein the higher-level security system (9) is designed to decouple and/or to divert the electrical energy from the respective storage element (1) when the predefinable change over time of the physical variable is exceeded.

2. Frequency converter according to claim 1, wherein the means (3) for detecting a physical variable is integrated into the storage element (1).

3. Frequency converter according to one of the preceding claims, wherein a further means for detecting a further physical variable, in particular a temperature, is assigned to the storage unit (11), wherein the means (3) and the further means for detecting the further physical variable are connected to the higher-level security system (9), wherein the (3) means for detecting the physical variable when the predefinable change over time is exceeded and the further means for detecting the further physical variable when a predefinable value is exceeded or when a further predefinable change over time is exceeded each have a specified electrical resistance (R), wherein the electrical resistance (R) is detected by the higher-level security system (9), wherein the means for detecting the physical variable and the further means for detecting the further physical variable are electrically connected in parallel.

4. Method for monitoring a frequency converter according to one of claims 1 to 3, for a malfunction, in particular a short circuit, wherein the storage unit (11) comprises one or more storage elements (1), wherein the means (3) for detecting the physical variable detects a change over time of the physical variable or the physical variable, wherein the means (3) for detecting the physical variable provides a signal and has an electrical resistance (R) when a predefinable change over time of the physical variable is exceeded, wherein the means (3) for detecting the physical variable has a known electrical resistance (R) depending on the change in the physical variable and the resistance (R) is detected by the higher-level security system (9) and the higher-level security system (9) interrupts the energy supply of the storage element (11) when the signal is received and discharges the stored energy from the storage element (1) in a controlled manner.

5. Method according to claim 4, wherein with the aid of the means (3) for detecting the physical variable, an increase in pressure and/or temperature in the immediate vicinity of the respective storage element (1) is detected.

6. Vehicle, in particular rail vehicle, having a frequency converter according to one of claims 1 to 3.

## Revendications

1. Convertisseur de fréquence, comportant une unité (11) d'accumulation d'énergie électrique, comportant au moins un élément (1) accumulateur pour l'accumulation d'énergie électrique, dans lequel l'unité (11) d'accumulation est constituée sous la forme d'un condensateur de circuit intermédiaire, dans lequel un moyen (3) de détection de grandeurs physiques dans le champ environnant immédiat de l'élément (1) accumulateur est associé à l'élément (1) accumulateur, dans lequel le moyen (3) de détection de la grandeur physique comprend une sonde de pression et une sonde (3a) de température, dans lequel le moyen (3) de détection de la grandeur physique est constitué pour la détection d'une variation de la grandeur physique en fonction du temps, dans lequel le moyen (3) de détection de la grandeur physique est constitué pour, lorsqu'une variation en fonction du temps pouvant être donnée à l'avance de la grandeur physique est dépassée, disposer d'un signal, dans lequel le moyen (3) de détection de la grandeur physique et l'élément accumulateur sont disposés dans un boîtier (1a) fermé ou sensiblement fermé, dans lequel le signal est constitué de manière correspondante à une résistance (R) électrique du moyen (3) de détection de la grandeur physique, dans lequel la résistance représente la sortie du moyen (3) de détection de la grandeur physique, dans lequel le dispositif d'analyse et/ou le moyen (3) de détection d'une grandeur physique sont reliés à un système (9) de sécurité supérieur hiérarchiquement, dans lequel le système de sécurité supérieur hiérarchiquement est constitué sous la forme d'une sécurité de protection vis-à-vis de l'incendie, dans lequel le système (9) de sécurité supérieur hiérarchiquement est constitué pour, si la variation en fonction du temps pouvant être donnée à l'avance de la grandeur physique est dépassée, le découplement et/ou la dérivation de l'énergie électrique de l'élément (1) accumulateur respectif.

2. Convertisseur de fréquence suivant la revendication 1, dans lequel le moyen (3) de détection d'une grandeur physique est intégré à l'élément (1) accumulateur.

3. Convertisseur de fréquence suivant l'une des revendications précédentes, dans lequel un autre moyen de détection d'une autre grandeur physique, notamment d'une température, est associé à l'unité (11) d'accumulation, dans lequel le moyen (3) et l'autre moyen de détection de l'autre grandeur physique sont reliés au système (9) de sécurité supérieur hiérarchiquement, dans lequel le moyen (3) de détection de la grandeur physique, si la variation dans le temps pouvant être donnée à l'avance est dépassée, et l'autre moyen de détection de l'autre grandeur physique, si une valeur pouvant être donnée à l'avance est dépassée ou si une autre variation en fonction du temps pouvant être donnée à l'avance est dépassée, ont chacun une résistance (R) électrique fixée, dans lequel la résistance (R) électrique est détectée par le système (9) de sécurité supérieur hiérarchiquement, dans lequel le moyen de détection de la grandeur physique et l'autre moyen de détection de l'autre grandeur physique sont montés en parallèle électriquement.

4. Procédé de contrôle d'un fonctionnement défectueux, notamment d'un court-circuit, sur un convertisseur de fréquence suivant l'une des revendications 1 à 3, dans lequel l'unité (11) d'accumulation comprend un ou plusieurs éléments (1) accumulateur, dans lequel le moyen (3) de détection de la grandeur physique détecte une variation en fonction du temps de la grandeur physique ou la grandeur physique, dans lequel le moyen (3) de détection de la grandeur physique donne, si une variation en fonction du temps pouvant être donnée à l'avance de la grandeur physique est dépassée, un signal et a une résistance (R) électrique, dans lequel le moyen (3) de détection de la grandeur physique a, suivant la variation de la grandeur physique, une résistance (R) électrique connue et la résistance (R) est détectée par le système (9) de sécurité supérieur hiérarchiquement et le système (9) de sécurité supérieur hiérarchiquement interrompt à la réception du signal l'apport d'énergie de l'élément (11) accumulateur et fait sortir de manière contrôlée l'énergie accumulée de l'élément (1) accumulateur.

5. Procédé suivant la revendication 4, dans lequel, à l'aide du moyen (3) de détection de la grandeur physique, on détecte une élévation de pression et/ou de température dans le champ environnant immédiat de l'élément (1) accumulateur respectif.

6. Véhicule, notamment véhicule ferroviaire, comportant un convertisseur de fréquence suivant l'une des revendications 1 à 3.
